## Europäisches Patentamt
## European Patent Office
## Office européen des brevets

(19)

(11) Veröffentlichungsnummer : **0 033 857**
**B1**

(12) **EUROPÄISCHE PATENTSCHRIFT**

(45) Veröffentlichungstag der Patentschrift :
**21.03.84**

(51) Int. Cl.³ : **G 08 B 13/04**

(21) Anmeldenummer : **81100339.1**

(22) Anmeldetag : **17.01.81**

(54) **Mehrschichtige Alarmglasscheibe.**

(30) Priorität : **01.02.80 DE 3003683**

(43) Veröffentlichungstag der Anmeldung :
**19.08.81 Patentblatt 81/33**

(45) Bekanntmachung des Hinweises auf die Patenterteilung : **21.03.84 Patentblatt 84/12**

(84) Benannte Vertragsstaaten :
**AT BE CH DE FR GB IT LI NL**

(56) Entgegenhaltungen :
CA-A-  873 492
CA-A-  920 683
CH-A-  525 524
CH-A-  591 128
DE-B- 1 278 292
DE-B- 2 404 278
US-A- 3 609 739
US-A- 3 634 845

(73) Patentinhaber : **VEGLA Vereinigte Glaswerke GmbH
Viktoria Allee 3-5
D-5100 Aachen (DE)
CH DE GB LI NL AT
SAINT-GOBAIN VITRAGE
Les Miroirs 18, avenue d'Alsace
F-92400 Courbevoie (FR) .
BE FR IT**

(72) Erfinder : **Sieckmann, Jürgen, Dr.
Tittartshang 13
D-5100 Aachen (DE)**
Erfinder : **Vornholt, Hans
Kleikstrasse 97
D-5120 Herzogenrath (DE)**

(74) Vertreter : **Biermann, Wilhelm, Dr.-Ing.
VEGLA Vereinigte Glaswerke GmbH Viktoriaallee 3-5
D-5100 Aachen (DE)**

EP 0 033 857 B1

Mehrschichtige Alarmglasscheibe

Die Erfindung betrifft eine mehrschichtige Alarmglasscheibe, bei der eine äußere Scheibe aus vorgespanntem Silikatglas besteht, diese vorgespannte Silikatglasscheibe auf ihrer nach außen gerichteten Oberfläche eine Leiterschleife aus einem eingebrannten elektrisch leitenden Email trägt, und diese vorgespannte Silikatglasscheibe mit den anderen Schichten auf der der Leiterschleife gegenüberliegenden Oberfläche über einen Abstandsrahmen oder über eine transparente Klebefolie wenigstens entlang der beiden der Leiterschleife benachbarten Kanten fest verbunden ist.

Mehrschichtige Alarmglasscheiben dieser Art sind z. B. aus der DE-B 12 78 292 bekannt. Bei den aus dieser Druckschrift bekannten Ausführungsformen ist die Leiterschleife entlang einer Kante der Glasscheibe angeordnet, und zwar in unmittelbarer Nähe der Glasscheibenkante, das heißt in einem Bereich, der zumindest teilweise von dem Einbaurahmen überdeckt werden kann. Bei dieser bekannten Alarmglasscheibe kann es Fälle geben, in denen beim Bruch der vorgespannten Glasscheibe keine Signalgabe erfolgt. Wegen der Anordnung der Leiterschleife an der genannten Stelle können nämlich die beim Bruch der Glasscheibe entstehenden Glasbruchstücke von den anliegenden Schichten und/oder von dem Einfaßrahmen festgehalten werden, so daß keine Gewähr für eine sichere Durchtrennung der Leiterbahn gegeben ist.

Eine Alarmglasscheibe mit demgegenüber erhöhter Sicherheit der Alarmgabe im Fall ihrer Zerstörung ist in der DE-B-24 02 278 beschrieben. Bei der in dieser Patentschrift beschriebenen Anordnung ist wenigstens ein Teil des elektrischen Leiters im Bereich einer Ecke der Glasscheibe angeordnet, und dieser Eckbereich ist weder auf den Kanten noch auf den Seiten der Sichtflächen mit dem die Glasscheibe einfassenden Rahmen oder einem anderen Gegenstand fest verbunden. Um den Eckbereich von jeder Verbindung mit dem Rahmen oder mit den anderen Schichten freizuhalten, ist er von einem starren Gehäuse umgeben, das außerhalb des Eckbereichs mit der Glasscheibe dicht verklebt ist. Diese bekannte Lösung benötigt durch die Anordnung des Abdeckgehäuses einen zusätzlichen Material- und Arbeitsaufwand.

Ausgehend von diesem Stand der Technik liegt der Erfindung die Aufgabe zu Grunde, eine Alarmglasscheibe dieser Art zu schaffen, die einerseits im Fall ihrer Zerstörung mit Sicherheit das gewünschte Signal gibt, und die andererseits mit geringerem Aufwand hergestellt werden kann, wobei ihre Funktionstüchtigkeit auch über lange Zeiten nicht beeinträchtigt werden darf.

Diese Aufgabe wird erfindungsgemäß dadurch gelöst, daß die Leiterschleife im Bereich einer Ecke der vorgespannten Silikatglasscheibe angeordnet ist, und zwar in einem solchen Abstand von den Kanten der Silikatglasscheibe, daß wenigstens Teile der Leiterschleife innerhalb der lichten Öffnung, d. h. außerhalb des später von dem Einbaurahmen überdeckten Randbereichs sitzen.

Während also für die erfindungsgemäße Lösung die feste Verbindung der die Leiterschleife tragenden Silikatglasscheibe mit den anderen Schichten der Alarmglasscheibe eine wesentliche Voraussetzung ist, war man in der Fachwelt davon ausgegangen, daß eine solche feste Verbindung auf jeden Fall vermieden werden müsse. Das ergibt sich insbesondere auch aus CA-A-873 492 und 920 683, die ebenso wie die DE-B 24 02 278 die Anordnung von Leiterschleifen auf vorgespannten Silikatglasscheiben beschreiben, bei denen der die Leiterschleife tragende Kantenbereich der Silikatglasscheibe sowohl auf den Kanten als auch auf den Flächen von jeder Verbindung mit dem Rahmen oder mit den anderen Schichten der Alarmglasscheibe freibleibt, so daß die Glasbruchstücke sich ungehindert voneinander lösen können.

Wider Erwarten erfüllt die erfindungsgemäße Alarmglasscheibe trotz der festen Verbindung der die Leiterschleife tragenden Silikatglasscheibe mit den anderen Schichten alle genannten Forderungen und gibt insbesondere im Fall ihrer Zerstörung mit Sicherheit das elektrische Signal. Die Wirkungsweise der erfindungsgemäßen Alarmglasscheibe kann wie folgt erklärt werden : Durch die feste Verbindung der der Leiterschleife gegenüberliegenden Oberfläche der Glasscheibe mit den anderen Schichten der Alarmglasscheibe wird diese Oberfläche beim Bruch der Glasscheibe an ihrer Ausdehnung gehindert, während eine ähnliche Behinderung auf derjenigen Seite, auf der die Leiterschleife sitzt, nicht vorhanden ist. Durch diese unterschiedlichen Ausdehnungsmöglichkeiten auf beiden Seiten wird eine geringfügige Auswölbung der Glasscheibe erreicht. Infolge dieser geringfügigen Auswölbung haben die Kanten der Bruchstücke auf der Außenseite der Glasscheibe einen größeren Abstand voneinander als auf der Innenseite, wodurch die Unterbrechung der Leiterschleife begünstigt wird. Um die Trennung der Bruchstücke auf der äußeren Oberfläche der Glasscheibe nicht zu beeinträchtigen, besteht der Schutzüberzug, durch den die Leiterschleife gegen korrodierende Einflüsse geschützt wird, ebenfalls aus einem spröden Material, insbesondere aus einem emailartigen Material, das sich bei der Dehnung der Glasscheibe nicht verformt, sondern das ebenso wie die Glasscheibe und die Leiterschleife ohne Dehnung reißt bzw. zerspringt.

Bevorzugte Ausführungsformen der Erfindung sind Gegenstand der Unteransprüche und werden nachfolgend an Hand der Zeichnungen näher beschrieben. Von den Zeichnungen zeigt

Figur 1 eine erfindungsgemäße Alarmglasscheibe in Form einer mehrschichtigen Isolierglasscheibe ;

Figur 2 eine Schnittdarstellung entsprechend der Linie II-II in Fig. 1 ;

Figur 3 eine Schnittdarstellung entsprechend der Linie III-III in Fig. 1, und

Figur 4 eine erfindungsgemäße Alarmglasscheibe in Form einer mehrschichtigen Verbundglasscheibe.

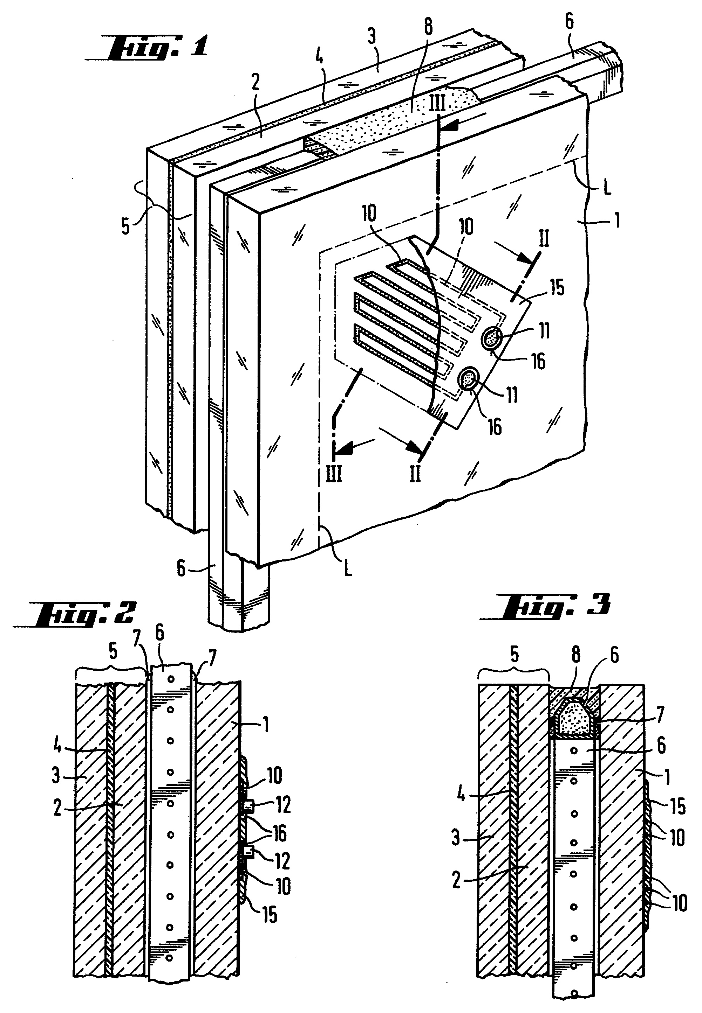

Die in Fig. 1 dargestellte mehrschichtige Alarmglasscheibe umfaßt eine auf thermischem Wege vorgespannte Silikatglasscheibe 1 und eine aus den beiden Glasscheiben 2 und 3, die über eine plastische Zwischenschicht 4 miteinander verbunden sind, bestehende Verbundglasscheibe 5. Die Verbundglasscheibe 5 ist mit der vorgespannten Glasscheibe 1 unter Zwischenschaltung eines aus einem Hohlprofil bestehenden Abstandhalters 6 verbunden. Zur Verklebung und Abdeckung dienen in bekannter Weise Klebe- und Versiegelungsschichten 7 und 8, die einerseits zwischen dem Abstandhalter 6 und der Glasscheibe 7, und andererseits in der durch die Randbereiche der anliegenden Glasscheiben und durch den Abstandshalter gebildeten Hohlkehle 8 angeordnet sind. Insoweit entspricht der Aufbau der Alarmglasscheibe dem Aufbau bekannter einbruchhemmender Isolierglasscheiben.

Die Alarmglasscheibe ist nach ihrem Einbau in der Fensteröffnung von einem Rahmen eingefaßt, der etwa bis zu den mit L bezeichneten Linien reicht, so daß jenseits der Linien L die lichte Öffnung des Fensters beginnt. In diesem von dem Rahmen nicht überdeckten Bereich der lichten Öffnung ist auf der äußeren Oberfläche der vorgespannten Glasscheibe 1 die Leiterschleife 10 angeordnet. Die Alarmglasscheibe wird so eingebaut, daß die mit der Leiterschleife 10 versehene Oberfläche dem zu Schützenden Raum zugewendet ist, während die Verbundglasscheibe 5 nach außen hin angeordnet wird.

Die Leiterschleife 10 besteht aus eingebranntem emailartigen Leitsilber, d. h. aus einer Zusammensetzung aus niedrigschmelzendem Glas und metallischen Silberpartikeln, wie es für diese Zwecke bekannt ist. Die als druckfähige Paste vorliegende Zusammensetzung wird mit Hilfe des Siebdruckverfahrens auf die Oberfläche der Glasscheibe 1 aufgedruckt. Die Leiterschleife 10 hat vorzugsweise Mäanderform. An den beiden Enden ist sie mit je einer kreisförmigen Verbreiterung 11 versehen, auf denen Anschlußelemente 12 aufgelötet werden, über die der elektrische Anschluß an die elektrische Signalschaltung erfolgt.

Über der Leiterschleife 10 ist die Korrosionsschutzschicht 15 angeordnet. Sie besteht ebenso wie die Leiterschleife 10 aus einem spröden Material, nämlich einer keramischen Farbe. Auch diese Korrosionsschutzschicht 15 wird in Pastenform mit Hilfe des Siebdruckverfahrens aufgedruckt. Das Aufdrucken dieser Schicht 15 erfolgt in einem zweiten Druckvorgang, wenn die aufgedruckte Leiterschleife 10 getrocknet ist. Wenn die aufgedruckte Schicht 15 getrocknet ist, werden die Leiterschleife 10 und die Schutzschicht 15 in ein und demselben Wärmebehandlungsprozeß, nämlich bei der für die Vorspannung notwendigen Erwärmung auf etwa 620 Grad Celsius eingebrannt.

Oberhalb der kreisförmigen Verbreiterung 11 der Leiterschleife 10 ist die Korrosionsschutzschicht 15 mit kreisförmigen Aussparungen 16 versehen, um den Zugang zu den Flächen 11 zu ermöglichen, auf denen später die Anschlußelemente 12 aufgelötet werden.

Die Korrosionsschutzschicht 15 ist vorzugsweise opak, d. h. undurchsichtig. Dadurch wird der Blick von außen auf die für den Anschluß der Leiterschleife erforderlichen Einrichtungen versperrt. Für diesen Zweck bewährt haben sich beispielsweise keramische Einbrennfarben der Fa. DEGUSSA, die als « Farben für Bauglas » in für den Siebdruck geeigneter Pastenform geliefert werden.

Bei einer gewaltsamen Zerstörung der vorgespannten Glasscheibe 1 von der Außenseite der Alarmglasscheibe her wölbt sich die Glasscheibe 1 unter der Wirkung der Verbindung mit dem Abstandshalter 6, befünstigt durch den Stoß oder Schlag auf der dem Abstandshalter 6 anliegenden Seite, zu der dem Raum zugewandten Seite hin aus, wodurch die sichere Unterbrechung der Leiterschleife 10 gewährleistet ist.

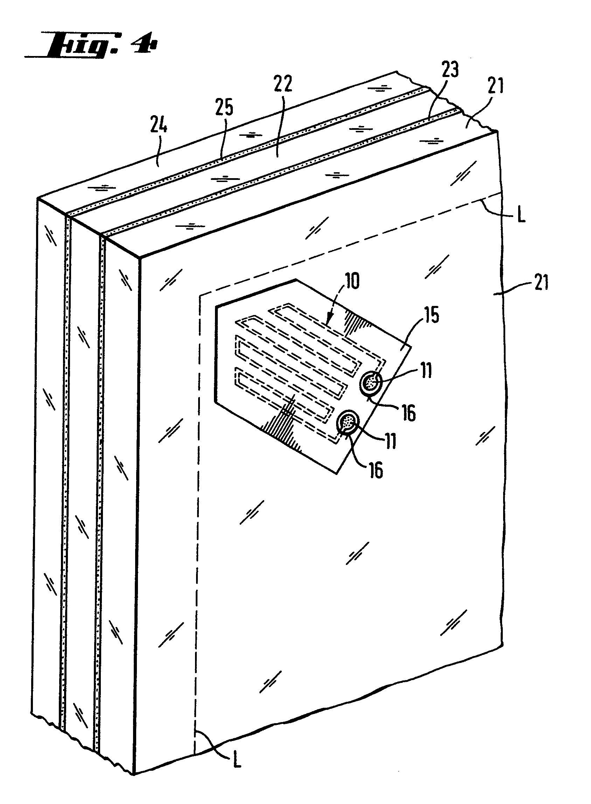

Die in Fig. 4 dargestellte Alarmglasscheibe unterscheidet sich von der zuvor beschriebenen Ausführungsform nur durch ihren Schichtenaufbau. Die die Leiterschleife 10 tragende vorgespannte Glasscheibe 21 ist in diesem Fall mit einer nicht vorgespannten Glasscheibe 22 über eine plastische Zwischenschicht 23 ganzflächig verbunden. Zur Erhöhung der einbruchhemmenden Wirkung ist eine weitere Glasscheibe 24 mit der Glasscheibe 22 über die thermoplastische Zwischenschicht 25 verbunden. Diese als dreischichtige Verbundglasscheibe ausgebildete Alarmglasscheibe wird so in die Fensteröffnung eingebaut, daß die Leiterschleife 10 dem zu schützenden Raum zugewandt ist. Bei einer Zerstörung der borgespannten Glasscheibe 21 ist ihre mit der Glasscheibe 22 verbundene Oberfläche an der Ausdehnung stärker gehindert als die freie, die Leiterschleife 10 tragende Oberfläche, so daß sich die Glasscheibe 21 auf der die Leiterschleife 10 tragenden Oberfläche auswölbt, und so die Durchtrennung der Leiterschleife 10 gewährleistet ist.

## Ansprüche

1. Mehrschichtige Alarmglasscheibe, bei der eine äußere Scheibe aus vorgespanntem Silikatglas besteht, diese vorgespannte Silikatglasscheibe (1, 21) auf ihrer nach außen gerichteten Oberfläche eine Leiterschleife (10) aus einem eingebrannten elektrisch leitenden Email trägt, und diese vorgespannte Silikatglasscheibe (1, 21) mit den anderen Schichten (2, 3, 4 ; 22, 23, 24) auf der der Leiterschleife (10) gegenüberliegenden Oberfläche über einen Abstandsrahmen (16) oder über eine transparente Klebefolie (23) wenigstens entlang der beiden der Leiterschleife (10) benachbarten Kanten fest verbunden ist, dadurch gekennzeichnet, daß die Leiterschleife (10) im Bereich einer Ecke der vorgespannten Silikatglasscheibe (1, 21) angeordnet ist, und zwar in einem solchen Abstand von den Kanten der Silikatglasscheibe (1, 21), daß wenigstens Teile der Leiterschleife (10) innerhalb der lichten Öffnung, d. h. außerhalb des später von dem Einbaurahmen überdeckten Randbereiches sitzen.

2. Alarmglasscheibe nach Anspruch 1, dadurch gekennzeichnet, daß die Leiterschleife (10) mit einem spröden Korrosionsschutzüberzug (15) aus einer keramischen Einbrennfarbe versehen ist.

3. Alarmglasscheibe nach Anspruch 1 und 2, dadurch gekennzeichnet, daß die Korrosionsschutzschicht (15) aus der keramischen Einbrennfarbe gleichzeitig mit der Leiterschleife (10) im Zuge des Aufheizprozesses für den Vorspannvorgang der Glasscheibe (1 ; 21) eingebrannt ist.

4. Alarmglasscheibe nach Anspruch 1 bis 3, dadurch gekennzeichnet, daß die Korrosionsschutzschicht (15) aus einer undurchsichtigen Einbrennfarbe besteht.

5. Alarmglasscheibe nach Anspruch 1 bis 4, dadurch gekennzeichnet, daß die Korrosionsschutzschicht (15) oberhalb der Anschlußflächen (11) der Leiterschleife (10) mit Ausnehmungen (16) versehen ist.

## Claims

1. A multi-layer alarm glass window pane, in the case of which an outer pane member is made of tempered silicate glass, said tempered silicate pane member (1 and 21) having a loop of conductor (10) on its outwardly facing surface, said conductor being made of a fired-on electrically conducting enamel, said tempered silicate glass pane (1 and 21) being strongly joined with the other layers (2, 3, 4 ; 22, 23 and 24) on the surface, on the side opposite to the loop of conductor (10), by way of a spacing frame (16) or by way of a transparent adhesive foil (23) at least along the two edges edges next to the loop of conductor (10), characterized in that the loop of conductor (10) is placed at one corner of the tempered silicate glass window pane (1 and 21) at such a distance from the edges of the silicate glass window pane (1 and 21) that at least parts of the loop of conductor (10) are seated within the clearance opening, that is to say outside the edge part later to be covered by the fitting frame.

2. The alarm window glass pane as claimed in claim 1 characterized in that the loop of conductor (10) has a brittle anti-corrosion coating (15) of fired ceramic coloring material thereon.

3. The alarm glass window pane as claimed in claim 1 and claim 2 characterized in that the anti-corrosion layer (15) made of a ceramic fired coloring material is fired on together with the loop of conductor (10) as part of the heating up stage for tempering the glass pane (1 ; 21).

4. The alarm glass window pane as claimed in claim 1 to claim 3 characterized in that said anti-corrosion layer (15) is made of an opaque fired coloring material.

5. The alarm glass window pane as claimed in claim 1 to claim 4 characterized in that the anti-corrosion layer (15) has openings (16) therein over the terminal faces (11) of the loop of conductor (10).

## Revendications

1. Vitre d'alarme à plusieurs couches dans laquelle une vitre extérieure est en verre silicaté trempé, cette vitre en verre silicaté trempé (1, 21) portant, sur sa face tournée vers l'extérieur, une boucle conductrice (10) faite d'un émail conducteur électrique cuit au four et cette vitre en verre silicaté trempé (1, 21) étant reliée rigidement aux autres couches (2, 3, 4 ; 22, 23, 24) par sa surface opposée à la boucle conductrice (10) par l'intermédiaire d'un cadre d'entretoisement (16) ou d'une pellicule adhésive transparente (23) au moins le long des deux bords voisins de la boucle conductrice (10), caractérisée en ce que la boucle conductrice (10) est montée dans la zone d'un coin de la vitre en verre silicaté trempé (1, 21) et ce, à une distance des bords de la vitre en verre silicaté (1, 21) telle qu'au moins des parties de la boucle conductrice (10) soient situées dans le jour de la vitre, c'est-à-dire à l'extérieur de la zone marginale recouverte ultérieurement par le cadre de montage.

2. Vitre d'alarme suivant la revendication 1, caractérisée en ce que la boucle conductrice (10) est pourvue d'un revêtement de protection contre la corrosion (15) cassant fait d'une couleur céramique à cuire au four.

3. Vitre d'alarme suivant les revendications 1 et 2, caractérisée en ce que la couche de protection contre la corrosion (15) faite de la couleur céramique à cuire au four est cuite en même temps que la boucle conductrice (10) au cours du processus de chauffage nécessaire pour l'opération de trempe de la vitre (1, 21).

4. Vitre d'alarme suivant les revendications 1 à 3, caractérisée en ce que la couche de protection contre la corrosion (15) est faite d'une couleur opaque à cuire au four.

5. Vitre d'alarme suivant l'une quelconque des revendications 1 à 4, caractérisée en ce que la couche de protection contre la corrosion (15) est pourvue d'évidements (16) au-dessus des surfaces de connexion (11) de la boucle conductrice (10).

**Fig. 1**

**Fig. 2**

**Fig. 3**

Fig. 4